# EUROPEAN PATENT APPLICATION

(11) **EP 1 185 042 A2**
(43) Date of publication of application: **06.03.2002**
(21) Application number: 01307394.5
(22) Date of filing: 30.08.2001
(51) Int. Cl.: H04L 12/58

(54) **Electronic mail distribution through a post office protocol (POP) server**

(30) Priority: 31.08.2000 US 652369
(71) Applicant: International Business Machines Corporation, Armonk, NY 10504 (US)
(72) Inventor: McBrearty,Gerald Francis.c/o IBM.UK.Ltd IPL, Winchester, Hampshire. SO21 2JN (GB); McMullen, Shawn Patrick.c/o IBM.UK.Ltd IPL, Winchester, Hampshire. SO21 2JN (GB); Reynolds, Alan Paul.c/o IBM.UK.Ltd IPL, Winchester, Hampshire. SO21 2JN (GB); Shieh, Johnny Meng-Han.c/o IBM.UK.Ltd IPL, Winchester, Hampshire. SO21 2JN (GB)
(74) Representative: Burt, Roger James, Dr.

(57) **Abstract**

An electronic mail distribution system for network, e.g. Internet, E-mail through a POP (Post Office Protocol) server where the E-mail goes directly to a palm-type terminal and also to a matching or corresponding terminal, e.g. desktop computer. There are means in the palm-type display terminal for communicating with said other user designated display terminal to coordinate the processing of said same downloaded electronic mail, with preferred means for deleting, indicating as read, filing or forwarding said electronic mail.

## Description

The present invention relates to computer managed communication networks such as the World Wide Web (Web) and, particularly, to electronic mail (E-mail) messages transmitted over such networks to palm-type display terminals.

The past decade has been marked by a technological revolution driven by the convergence of the data processing industry with the consumer electronics industry. The effect has, in turn, driven technologies which have been known and available but relatively quiescent over the years. A major one of these technologies is the Internet or Web related distribution of documents. The Web or Internet, which had quietly existed for over a generation as a loose academic and government data distribution facility, reached "critical mass" and commenced a period of phenomenal expansion. With this expansion, businesses and consumers have direct access to all matter of documents and media through the Web. Also, as a result of the rapid expansion of the Web, E-mail, which has been distributed for over 25 years over smaller private and specific purpose networks, has moved into distribution over the Web because of the vast distribution channels that are available.

Along with the distribution of E-mail over the Web or Internet, has come a public demand for efficient access to Internet E-mail through palmtop-type terminals and particularly mobile and wireless palmtop type display terminals. These terminals, also known as PDAs (Personal Digital Assistants), include, for example, Motorola's Two-way Pager/PDA, the PalmPilot™ palmtop device and the International Business Machines Corporation (IBM) WorkPad™ handheld. Current estimates are that there are more than ten million of these devices in present usage.

The technology is seeking applications of greater mass appeal. One area of great potential is in the area of communication, e.g. E-mail through the Web or Internet (used synonymously). Initially, the palmtop-type computers accessed the Web through the desktop computer with which the palmtop-type device was synchronised, using, for example, the HotSync™ function, where the device is synchronised with a desktop personal computer which functions as a receiving station on the Web, so that the E-mail communication may be through the synchronised personal computer. In recent years, personal palmtop devices have also developed a networking protocol: TCP/IP, which permits direct connection to the Web through PDAs, i.e. palm-type terminal modems, which are described in greater detail at pp. 148-149 of the text Palm III & PalmPilot Jeff Carlson, Peachpit Press, 1998.

The most common current protocol for accessing E-mail involves POP (Post Office Protocol) servers. The current version is Version 3 (POP3). The service provider provides a POP server, which is characterised by relatively low amounts of storage capacity for the quantity of E-mail which it handles. Thus, it is not intended to store E-mail messages for long periods of time; the user's E-mail remains in the POP server until it is opened. Upon opening, the server downloads the E-mail to the user terminal. The POP server is discussed in more detail in the text, The Web Navigator, Paul Gilster, Wiley Computer Publishing, New York, 1997, at pp. 184-187, and in the above-mentioned Palm III & PalmPilot text.

When palm-type display terminals first started to handle E-mail, they did so in a HotSync mode, as described above. While this was satisfactory for many purposes, the business office workplace was becoming increasingly mobile and diverse, thus requiring a greater commitment to mobile communications. The mobile office was not very amenable to the delays and possible hold-ups in accessing E-mail through desktop HotSync protocols. Consequently, most palm-type display terminals preferably access E-mail directly from the Internet. Direct-dial E-mail is described in detail in the above text, Palm III & PalmPilot on pages 159-163. POP3 has been the preferred server for such direct-dial E-mail. While direct E-mail has certainly enabled users to receive and respond to E-mail in a very prompt and timely manner, because of the limited storage capacity in the palm-type devices, the device provides only limited resources required to store, file and otherwise process E-mail requests. This has given rise to multimail procedures wherein, in addition to the direct E-mail transmission to the palm-type display terminal, a copy of each E-mail is also separately sent to at least one designated matching terminal such as a desktop PC which does have the storage capacity and computer power to perform such ancillary tasks on the E-mail which are beyond the capacity of the palm-type terminal or its POP server. However, such multimail procedures have been putting a strain on the capacity of the POP servers. As stated above, these servers were designed with a relatively low storage capacity relative to the number of E-mail user client terminals served. Thus, the POP server downloads the E-mail to the client computer, i.e. the palm-type display device, as soon as the E-mail is opened. However, in the multimail, multi-client environment, instead of the POP server being rid of the downloaded E-mail, the E-mail remains on the server until the matching client computer, e.g. the desktop, also independently deletes or files the E-mail. When the user spends a great deal of his time away from his desktop, it may be readily seen that the user may be forgetful or neglectful in regularly cleaning up the E-mail message queues on his desktop. In the case where several of the users served by the POP server forget to clear their desktop queues, this may lead to a quick build-up of E-mail messages stored for the corresponding desktop computers to the point where the POP server can no longer process even the direct E-mail to the palm-type display computers.

It should be noted that this problem primarily exists with POP servers in multimail distribution palm-type computer environments. Where IMAP (Internet Message Access Protocol) servers are used to distribute E-mail, the problem is not significant. IMAP servers have relatively unlimited server capacity so that the E-mail is stored on the server until it is deleted and is provided to the user client computers as needed, rather than being downloaded into the client computer as soon as opened. However, IMAP servers are quite expensive and POP servers are still the work horse server environment for a great deal of routine E-mail distributions to palm-type display computers.

A first aspect of the present invention accordingly provides, in a communication network with user access via a plurality of data processor controlled interactive display terminals, an electronic mail distribution system for mail sent to said terminals from locations remote from said terminals comprising: a POP server for receiving electronic mail addressed to user designated display terminals and for downloading said received mail to said user designated display terminals; a user designated palm-type display terminal for directly receiving from said POP server said downloaded mail addressed to said user; at least one other user designated display terminal for also receiving the same downloaded mail addressed to said user; and means in said palm-type display terminal for communicating with said other user designated display terminal to coordinate the processing of said same downloaded electronic mail.

Preferably, said server does not retain said downloaded electronic mail.

The electronic mail distribution system of the first aspect preferably further includes: means in said other user designated display terminal responsive to said means for communicating for coordinating the processing of said same downloaded electronic mail.

Preferably, said means for coordinating the processing of said same downloaded electronic mail includes means for deleting said same downloaded electronic mail from said other designated display terminal when said downloaded electronic mail is deleted from said palm-type display terminal.

Preferably, said means for coordinating processing of said same downloaded electronic mail includes means for indicating as read said same downloaded electronic mail in said other designated display terminal when said downloaded electronic mail is read on said palm-type display terminal.

Preferably, said means for coordinating processing of said same downloaded electronic mail includes means for forwarding said downloaded electronic mail.

Preferably, said means for coordinating the processing of said same downloaded electronic mail includes means for filing said downloaded electronic mail.

In a second aspect, the present invention provides, in an electronic mail distribution network wherein a POP server receives electronic mail from remote network locations addressed to user designated display terminals and downloads said received mail to said designated display terminals, a method of electronic mail distribution comprising: designating, by a user, a palm-type display terminal for directly receiving from said POP server said downloaded mail addressed to said user; designating, by said user, at least one other display terminal for also receiving the same downloaded mail addressed to said user; and coordinating the processing of said same downloaded electronic mail by communicating with said other user designated display terminal from said palm-type display terminal.

Preferably, said server does not retain said downloaded electronic mail.

The electronic mail distribution method of the second aspect preferably further includes the step of: coordinating the processing of said same downloaded electronic mail in said other user designated display terminal responsive to a communication from said palm-type display terminal.

Preferably, said step of coordinating the processing of said same downloaded electronic mail includes deleting said same downloaded electronic mail from said other designated display terminal when said downloaded electronic mail is deleted from said palm-type display terminal.

Preferably, said step of coordinating the processing of said same downloaded electronic mail includes indicating as read said same downloaded electronic mail in said other designated display terminal when said downloaded electronic mail is read on said palm-type display terminal.

Preferably, said step of coordinating the processing of said same downloaded electronic mail includes forwarding said downloaded electronic mail.

Preferably, said step of coordinating the processing of said same downloaded electronic mail includes filing said downloaded electronic mail.

In a third aspect, the present invention provides a computer program having code for electronic mail distribution in a network wherein a POP server receives electronic mail from remote network locations addressed to user designated display stations and downloads said received mail to said designated display terminals, said program comprising: a user designated palm-type display terminal for directly receiving from said POP server said downloaded mail addressed to said user; at least one other user designated display terminal for also receiving the same downloaded mail addressed to said user; and means in said palm-type display terminal for communicating with said other user designated display terminal to coordinate the processing of said same downloaded electronic mail.

Preferably, said server does not retain said downloaded electronic mail.

The computer program of the third aspect preferably further includes: means in said other user designated display terminal responsive to said means for communicating and coordinating the processing of said same downloaded electronic mail.

Preferably, said means for coordinating processing of said same downloaded electronic mail includes means for deleting said same downloaded electronic mail from said other designated display terminal when said downloaded electronic mail is deleted from said palm-type display terminal.

Preferably, said means for coordinating processing of said same downloaded electronic mail includes means for indicating as read said same downloaded electronic mail in said other designated display terminal when said downloaded electronic mail is read on said palm-type display terminal.

Preferably, said means for coordinating processing of said same downloaded electronic mail includes means for forwarding said downloaded electronic mail.

Preferably, said means for coordinating processing of said same downloaded electronic mail includes means for filing said downloaded electronic mail.

Embodiments of the present invention thus preferably provide an electronic mail distribution system for network, e.g. Internet, E-mail through a POP server where the E-mail goes directly to a palm-type terminal and also to a matching or corresponding terminal, e.g. desktop computer. There are means in the palm-type display terminal for communicating with said other user designated display terminal to coordinate the processing of said same downloaded electronic mail. Since the POP server must download to both the palm-type terminal and to the desktop terminal as quickly as possible, the communications to the corresponding desktop computer must expedite this downloading. Consequently, the corresponding or user designated terminal must be responsive to the palm-type terminal communicating means for coordinating the processing of the same downloaded electronic mail. This coordinating the processing of the same E-mail could be means for deleting the same downloaded electronic mail from the other designated display terminal when the downloaded electronic mail is deleted from the palm-type display terminal. It could also be means for indicating as read said same downloaded electronic mail in said other designated display terminal when said downloaded electronic mail is read on the palm-type display terminal. In addition, it could be means for forwarding and for filing the downloaded electronic mail. All of these potential actions are directed toward downloading and removing E-mail on the POP server being held for the other user designated terminal, e.g. the desktop computer.

A preferred embodiment of the present invention will now be described by way of example only, with reference to the accompanying drawings, in which:
Fig. 1 is a generalised view of an E-mail distribution system including a mobile wireless palm-type display computer and a corresponding desktop computer which may be used in the practice of a preferred embodiment of the present invention;
Fig. 2 is a block diagram of a data processing system including a central processing unit and network connections via a communications adapter which is capable of implementing the desktop corresponding computer (computer 57, Fig. 1) on which duplicate E-mail may be received, as well as implementing the POP server (server 56, Fig. 1);
Fig. 3 is a generalised block view of a conventional personal digital display assistant set up to carry out a preferred embodiment of the present invention;
Fig. 4 is an illustrative flowchart describing the setting up of the functions to distribute E-mail directly to palm-type display computers and to communicate by message to the desktop; and
Fig. 5 is a flowchart of an illustrative run of the program set up according to Fig. 4.

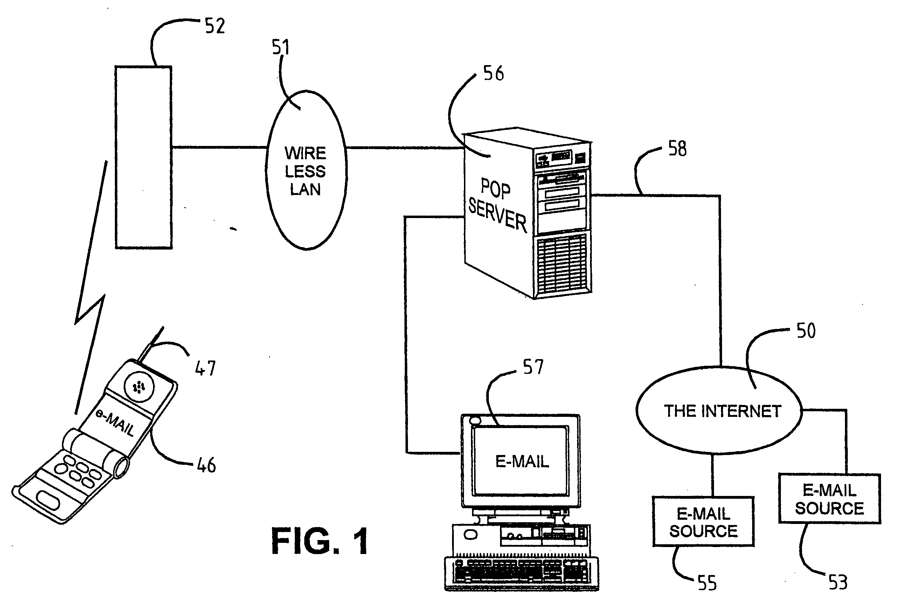

Referring to Fig. 1, there is provided a generalised system through which the individual mobile palm-type terminals 46 (also referred to as PDAs) may be connected to their respective POP servers 56. The mobile terminal 46 transmits/receives via antenna 47 to/from wireless terminal receiver 52 connected via wireless Local Area Network (LAN) 51 to POP server 56. It should be noted that the term personal palm-type device is used to generally cover all varieties of palm-type devices. These include cellular phones and related wireless devices, smartphones and Internet screen phones.

Alternatively, the palm-type terminal 46 need not be mobile. It may be connected directly to POP server 56 through PDA modems as described above. Since the set up is a multimail environment, the POP server also sends a duplicate of all E-mail received to a user designated alternative client terminal that, in this case, is desktop computer terminal 57. This desktop terminal is independently directly connected to POP server 56 through conventional connections, not shown in detail. The desktop terminal, as well as the non mobile palm-type terminal, is conventionally connected to POP E-mail server 56 through wired modem connections. Reference may be made to the text, Mastering the Internet, G. H. Cady et al., published by Sybex Inc., Alameda, CA, 1996, particularly pp. 136-147, for typical connections between local display stations to the Web or Internet for E-mail and other documents via an access server, such as POP server 56, which in turn is connected to the Internet 50 through connection 58. The E-mail which may originate through sources 53 and 55 is transmitted over the Internet from which it is accessed by POP server 56. Access from terminal 57, as well as any non mobile palm-type terminal may be via conventional host-dial connections. Such host-dial connections have been in use for many years. Such connections may be conventionally maintained by the service providers that maintain the POP server.

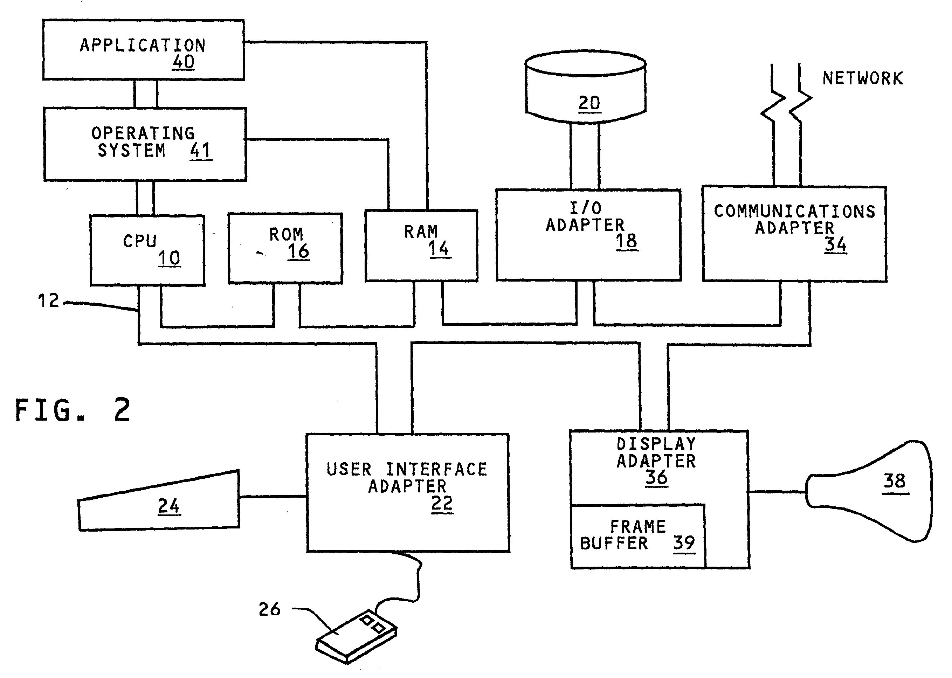

Referring to Fig. 2, a typical data processing terminal is shown which may function as the alternative desktop computer 57 (Fig. 1) or the POP server 56 (Fig. 1) in the processing of the E-mail. A central processing unit (CPU) 10, such as one of the PC microprocessors or workstations, e.g. RISC System/6000™ (RS/6000) series available from International Business Machines Corporation (IBM), is provided and interconnected to various other components by system bus 12. An operating system 41 runs on CPU 10, provides control and is used to coordinate the function of the various components of Fig. 2. Operating system 41 may be one of the commercially available operating systems, such as the AIX 6000™ operating system available from IBM; Microsoft's Windows 98™ or Windows NT™, as well as UNIX and AIX operating systems. Application programs 40, controlled by the system, are moved into and out of the main memory, Random Access Memory (RAM) 14. These programs include the programs of a preferred embodiment of the present invention for the routing and the downloading of E-mail to the palm-type terminal, as well as to the designated corresponding desktop terminal and for appropriate communication between such terminals for the processing of E-mail.

A Read Only Memory (ROM) 16 is connected to CPU 10 via bus 12 and includes the Basic Input/Output system (BIOS) that controls the basic computer functions. RAM 14, I/O adapter 18 and communications adapter 34 are also interconnected to system bus 12. I/O adapter 18 communicates with the disk storage device 20. Communications adapter 34 interconnects bus 12 with an outside network enabling the data processing system to communicate as respectively described above through the Web or Internet. The latter two terms are meant to be generally interchangeable and are so used in the present description of the distribution network. I/O devices are also connected to system bus 12 via user interface adapter 22 and display adapter 36. Keyboard 24 and mouse 26 are all interconnected to bus 12 through user interface adapter 22. It is through such input devices that the user may interactively receive or control E-mail messages. Display adapter 36 includes a frame buffer 39, which is a storage device that holds a representation of each pixel on the display screen 38. Images may be stored in frame buffer 39 for display on monitor 38 through various components, such as a digital to analog converter (not shown) and the like. By using the aforementioned I/O devices, a user is capable of inputting information to the system through the keyboard 24 or mouse 26 and receiving output information from the system via display 38.

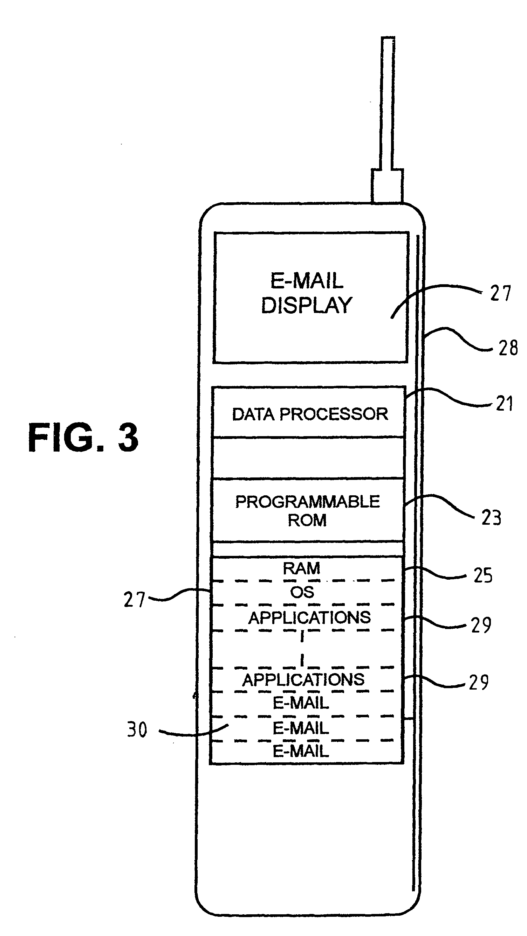

Referring now to Fig. 3, there is shown a very generalised diagram of the personal palm-type device 28. However, before proceeding further with this description, we will at this point provide some background with respect to the PDAs or personal palm-type devices used in a preferred embodiment of the present invention. The most common PDAs are included in the present generic definition: personal palm-type devices include Microsoft's WinCE line; the PalmPilot line produced by Palm Corp.; IBM's WorkPad, and Motorola's Two Way Pager. These devices are comprehensively described in the text, Palm III & PalmPilot, Jeff Carlson, Peachpit Press, 1998, and in the text, Palm Handheld, Johnson and Brioda, Osborne/McGraw-Hill, New York, 2000. They contain a data processor, operating system, approximately 2 to 4 MB of RAM and a permanent programmable memory, a programmable ROM which may be an EPROM or flash ROM which are described in the Carlson text at page 38. Because these flash ROMs can now provide 4 MB of capacity, all of the application programs conventionally stored on the personal handheld device's RAM may now also be stored in this ROM in addition to the device. An operating system and built-in applications are also conventionally stored in the ROM. Flash ROMs may be written into by a technique known as flashing so that future updates can be distributed as software and flashed into the ROM hardware. Thus, the personal palm-type device 28 includes a data processor 21, a programmable ROM 23, which is preferably the previously described Flash ROM, a RAM 25, which is shown in an operational state loaded with the device's operating system 27, its application programs 29, including the program of a preferred embodiment of the present invention and downloaded E-mail 30.

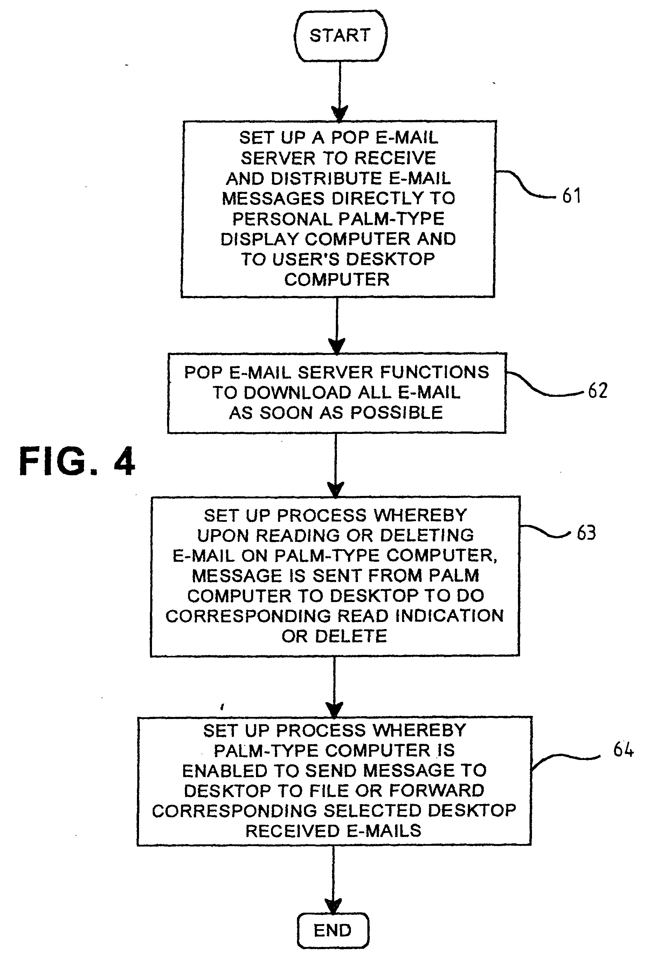

Now, with reference to programming shown in Fig. 4, the program of a preferred embodiment of the present invention is set up. The POP server is set up to receive and distribute E-mail messages directly to both the palm-type display computer and to another user designated alternative display computer, e.g. the user's desktop computer, step 61. The POP server selected for this E-mail distribution is conventionally one of very limited storage capacity. Thus, it operates to download all E-mail as soon as possible, step 62. A process is set up whereupon the user reading or deleting E-mail on his palm-type computer, a message is sent from the palm-type computer to the desktop computer to do a corresponding read or delete of the corresponding E-mail, step 63. A process is also set up whereby the palm-type computer is enabled to send messages to the desktop to file or forward E-mail corresponding to selected palm-type E-mail, step 64.

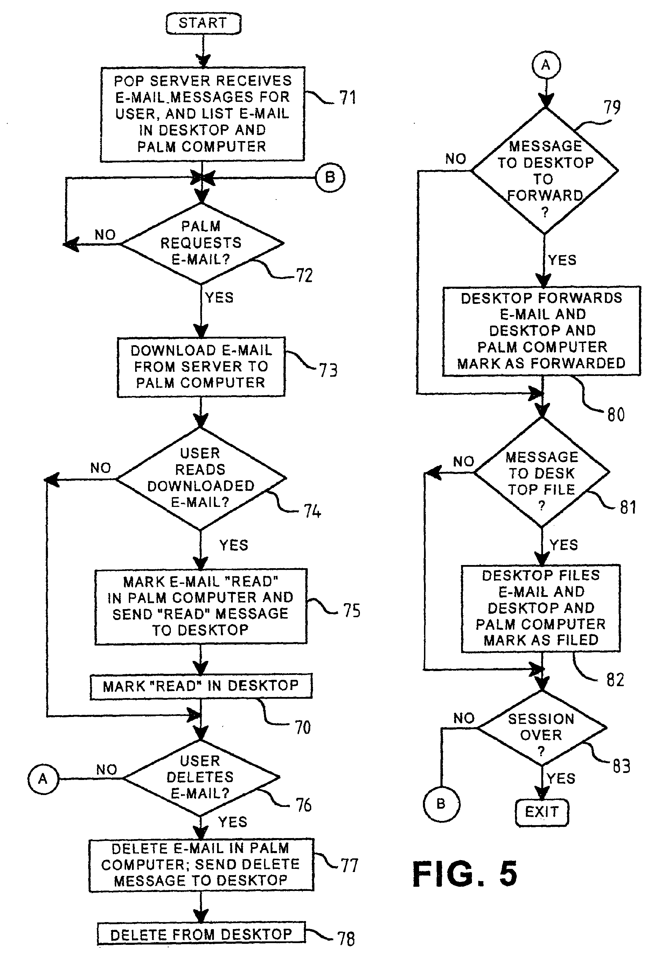

Now with reference to the flowchart of Fig. 5, a simplified illustrative run of the process set up in Fig. 4 will be described. The POP server receives E-mail for the user and lists the E-mail in the palm-type computer and in the corresponding desktop computer, step 71. This listing may be in the form of a conventional index where the received E-mail is listed in chronological order. A determination is made, step 72, as to whether the handheld computer requests E-mail. If No, the process returns to step 72 where a user request is awaited. If Yes, then the E-mail from the POP server is immediately downloaded to the Handheld computer, step 73. Then, a determination is made as to whether the user has read the E-mail downloaded to his handheld device, step 74. If Yes, then the particular E-mail is marked "Read" in the handheld computer E-mail index and a "Read" message is sent to the desktop from the handheld device, step 75. This message is sent from the handheld device through the POP server to the desktop. The POP server provides conventional utility or service routines for communication back and forth to the server from its clients for system administration. These routines may be used for this message communication. The E-mail item is now marked as read in the desktop computer E-mail index, step 70. The processing at this point depends on the particular POP server protocols. If the POP server has been set up to simultaneously download into the desktop, all E-mail items are downloaded into the handheld computer, then the read E-mail remains in the desktop until it is subsequently deleted from the handheld device. On the other hand, if the POP server protocol does not simultaneously download E-mail, then, when the E-mail is marked "Read" in step 70, the E-mail is then downloaded from the POP server into the desktop and the POP processing of that item of E-mail is completed. At this point, or if the user has not read the E-mail item (No from step 74), then a determination is made, step 76, as to whether the user has deleted the E-mail on his handheld device. If Yes, then the E-mail is deleted from the handheld computer and a delete message is sent to the desktop computer, step 77. The downloaded E-mail is also deleted from the desktop, step 78. If the user does not delete the E-mail in step 76, the process branches via "A" to step 79 where a determination is made as to whether the user has sent a message to forward from his handheld device to the desktop computer. The message is sent via the POP server by using the server utility routines described above. If Yes, the desktop computer forwards the E-mail as instructed in the message, and the handheld computer marks the E-mail as forwarded, step 80. At this point, or if the E-mail has not been forwarded, step 79, a determination is made, step 81, as to whether the user has sent a message to file from his handheld device to the desktop computer. If Yes, the desktop computer files the E-mail as instructed in the message and the handheld computer marks the E-mail as filed, step 82. At this point, or if the E-mail has not been filed, step 81, a determination may be conveniently made, step 83, as to whether the session is over. If Yes, the session is exited. If No, the process is returned to step 72 via branch "B" where a determination is again made as to whether the handheld user has requested an E-mail and the process is continued as described above.

It should be noted that the programs covered by a preferred embodiment of the present invention may be stored outside of the present computer systems until they are required. The program instructions may be stored in another readable medium, e.g. in a disk drive associated with the desktop computer or in a removable memory such as an optical disk for use in a CD ROM computer input, or in a floppy disk for use in a floppy disk drive computer input. Further, the program instructions may be stored in the memory of another computer prior to use in the system of a preferred embodiment of the present invention and transmitted over a LAN or a Wide Area Network (WAN), such as the Internet, when required by the user of a preferred embodiment of the present invention. One skilled in the art should appreciate that the processes controlling a preferred embodiment of the present invention are capable of being distributed in the form of computer readable media of a variety of forms.

## Claims

1. In a communication network with user access via a plurality of data processor controlled interactive display terminals, an electronic mail distribution system for mail sent to said terminals from locations remote from said terminals comprising:
a POP server for receiving electronic mail addressed to user designated display terminals and for downloading said received mail to said user designated display terminals;
a user designated palm-type display terminal for directly receiving from said POP server said downloaded mail addressed to said user;
at least one other user designated display terminal for also receiving the same downloaded mail addressed to said user; and
means in said palm-type display terminal for communicating with said other user designated display terminal to coordinate the processing of said same downloaded electronic mail.

2. The electronic mail distribution system of claim 1 wherein said server does not retain said downloaded electronic mail.

3. The electronic mail distribution system of claim 1 or claim 2 further including:
means in said other user designated display terminal responsive to said means for communicating for coordinating the processing of said same downloaded electronic mail.

4. The electronic mail distribution system of claim 3 wherein said means for coordinating the processing of said same downloaded electronic mail includes at least one of means for deleting said same downloaded electronic mail from said other designated display terminal when said downloaded electronic mail is deleted from said palm-type display terminal or means for indicating as read said same downloaded electronic mail in said other designated display terminal when said downloaded electronic mail is read on said palm-type display terminal.

5. The electronic mail distribution system of claim 3 or claim 4 wherein said means for coordinating processing of said same downloaded electronic mail includes at least one of at least one of means for forwarding said downloaded electronic mail or means for filing said downloaded electronic mail.

6. In an electronic mail distribution network wherein a POP server receives electronic mail from remote network locations addressed to user designated display terminals and downloads said received mail to said designated display terminals, a method of electronic mail distribution comprising:
designating, by a user, a palm-type display terminal for directly receiving from said POP server said downloaded mail addressed to said user;
designating, by said user, at least one other display terminal for also receiving the same downloaded mail addressed to said user; and
coordinating the processing of said same downloaded electronic mail by communicating with said other user designated display terminal from said palm-type display terminal.

7. The electronic mail distribution method of claim 6 wherein said server does not retain said downloaded electronic mail.

8. The electronic mail distribution method of claim 6 or claim 7 further including the step of:
coordinating the processing of said same downloaded electronic mail in said other user designated display terminal responsive to a communication from said palm-type display terminal.

9. The electronic mail distribution method of claim 10 wherein said step of coordinating the processing of said same downloaded electronic mail includes at least one of deleting said same downloaded electronic mail from said other designated display terminal when said downloaded electronic mail is deleted from said palm-type display terminal or indicating as read said same downloaded electronic mail in said other designated display terminal when said downlcaded electronic mail is read on said palm-type display terminal.

10. The electronic mail distribution method of claim 8 wherein said step of coordinating the processing of said same downloaded electronic mail includes at least one of forwarding said downloaded electronic mail or filing said downloaded electronic mail.

11. A computer program comprising computer code to, when loaded into a computer system and executed, cause said computer system to perform the steps of a method according to any of claims 8 to 10.
